# EUROPÄISCHE PATENTANMELDUNG

(11) **EP 2 581 777 A1**
(43) Veröffentlichungstag der Anmeldung: **17.04.2013**
(21) Anmeldenummer: 12187017.4
(22) Anmeldetag: 02.10.2012
(51) Int. Cl.: G02B 6/42, A61C 19/00

(54) **Lichtmischung**

(30) Priorität: 06.10.2011 EP 11184195
(71) Anmelder: Ivoclar Vivadent AG, 9494 Schaan (LI)
(72) Erfinder: Senn, Bruno, CH/9472 Grabs (CH)
(74) Vertreter: Baronetzky, Klaus

(57) **Zusammenfassung**

Die Erfindung betrifft um eine Lichtmischeinrichtung für eine medizinische oder dentalmedizinische Beleuchtungsvorrichtung, insbesondere für eine Lichthärtvorrichtung zum Polymerisieren von Dentalmassen, welche Vorrichtung ein Gehäuse mit einer Lichterzeugungseinrichtung, sowie einen Lichtleiter aufweist, wobei die Lichtmischeinrichtung (2) einen stabförmigen Lichtmischkörper (8) vorzugsweise mit mindestens einem transparenten Material, insbesondere Glas, sowie einen Halter (7) aufweist, durch welche die Lichtmischeinrichtung (2) zwischen der Lichterzeugungseinrichtung (1) und dem Lichtleiter (3) montierbar ist und vom Lichtleiter trennbar in Position gehalten wird.

## Beschreibung

Die Erfindung betrifft die Verbesserung von Beleuchtungsvorrichtungen, insbesondere auf dem Gebiet der Medizin und Dentalmedizin, sowie von Lichthärtvorrichtungen vorzugsweise zum dentalmedizinischen Gebrauch, die insbesondere mit Metallhalbleiterstrahlungsquellen wie Leuchtdioden ausgestattet sind und Strahlung im visuellen, UV- und/oder nahen infraroten Spektralbereich aussenden.

Konkret bezieht sich die Erfindung auf eine Lichtmischeinrichtung die insbesondere für die Verwendung in medizinischen oder dentalmedizinischen Beleuchtungsvorrichtungen oder Lichthärtvorrichtungen zum Polymerisieren von Dentalmassen geeignet ist. Der Begriff Licht, wie er hier in Beschreibung und Ansprüchen verwendet wird, steht dabei nicht nur für elektromagnetische Strahlung im sichtbaren Spektralbereich, sondern ebenso auch für elektromagnetische Strahlung im UV- und nahen Infrarotbereich. Wenn im Folgenden von den bevorzugt eingesetzten Leuchtdioden (bzw. LEDs oder LED-Chips) die Rede ist, so sollen diese Begriffe ebenso auch andere sichtbares Licht-, UV- und/oder nahes Infrarot emittierende Leuchtmittel und Strahlungsquellen, insbesondere Halbleiter-Strahlungsquellen einschließen, die - aus Gründen der besseren Lesbarkeit - nicht an allen Stellen aufgezählt werden sollen.

Derartige Lichthärtgeräte sind seit langem bekannt.

Ein Beispiel für eine Realisierung eines Lichtleiters aus den 70er Jahren lässt sich der DE 23 52 670 entnehmen. Bereits seinerzeit wurden biegsame Lichtleiter, die aus einer einzigen Faser bestehen, als bekannt angesehen. Die Druckschrift weist auch die Realisierung von lichtleitenden Flüssigkeiten und einen biegsamen Plastikschlauch für die Bereitstellung eines Lichtleiters als bekannt nach.

Lichtleiter, die aus einer einzigen Faser bestehen und auch als Lichtleitstab bezeichnet werden können, sind im Grunde vergleichsweise steif und lassen sich insofern schlecht biegen. Flüssigkeitsgefüllte Lichtleiter sind andererseits gerade bei Anwendungen im Oralbereich ungünstig, denn es besteht die Gefahr, dass der Patient - versehentlich - auf den Lichtleiter beißt und so ein Leck erzeugt.

In den 80er Jahren, aber auch bis heute, ist man daher typischerweise zu Mehrfaser-Lichtleitern übergegangen; als Beispiel hierfür sei die DE 297 09 785 genannt.

Mehrfaser-Lichtleiter, die auch als multicore Lichtleiter bezeichnet werden haben den Vorteil der wesentlich verbesserten Biegbarkeit. Der Zahnarzt kann so dem Lichtleiter endseitig die gewünschte Form geben, um den Lichtaustritt an der gewünschten, teilweise tiefliegenden Stelle, zu erhalten.

Gleiches gilt übrigens für die Verwendung von Lichtleitern für Lichtsensoren für Dentalkameras, aber auch beispielsweise für die Verwendung von Lichtleitern in Endoskopen, die ebenfalls enge Krümmungsradien benötigen.

Es ist bereits seit langer Zeit bekannt, dass man durch optisch additive Mischungen von Grundfarben wie Rot, Grün und Blau weisses Licht erzeugen kann. Dies wird ausgenutzt, indem LEDs entsprechender Farbgebung eng benachbart nebeneinander angeordnet werden, und deren Lichtemission dem Lichtleiter zugeleitet wird.

Zwar sind in neuerer Zeit auch sogenannte weisse LED bekannt geworden. Diese sind jedoch derzeit noch vergleichsweise teuer, und durch die Lichtmischung lässt sich auch der genaue Farbton besser an die Bedürfnisse anpassen. Es ist auch möglich, ein bestimmtes Emissionsspektrum auszuwählen.

Wenn eine einzige LED oder ein LED-Chip als Lichtquelle verwendet wird, erfolgt die Lichtemission primär an der Oberseite des LED-Chips, die typischerweise etwa 1mm² groß ist. Wenn nun ein multicorer Lichtleiter, der typischerweise einen Durchmesser von 6 bis 13 mm aufweist, vor dem LED-Chip montiert wird, trifft die Haupt-Lichtemission typischerweise lediglich die 6 oder 7 inneren Fasern, während die äußeren Lichtleitfasern nur zu einem ganz geringen Teil ausgenutzt werden.

Um dies zu verhindern, ist es bekannt geworden, eine Sammellinse am lichteingangsseitigen Ende der Lichtleitfasern einzusetzen. Andererseits bedeutet das zusätzliche Vorsehen einer Sammellinse zwei weitere optische Grenzflächen mit den entsprechenden Reflexionen, so dass der Wirkungsgrad sinkt.

In beiden genannten Anwendungsfällen greift man daher gerne auf monocore Lichtleiter oder Lichtleitstäbe zurück, insbesondere, da die gesamte Querschnittfläche des Lichtleiters bei monocorer Technik vom optisch wirksamen Medium eingenommen werden kann, im Gegensatz zu den Ausbeuteverlusten, die durch die Verwendung von multicoren Lichtleitern entstehen.

Weiterhin ist aus der Druckschrift EP 0 549 332 eine optische Kopplungsvorrichtung bekannt, die es erlaubt, innerhalb einer Lichtleiterstrecke, bestehend aus einem Faserbündel, unterschiedliche Lichtintensitäten zwischen den Einzelfasern des Faserbündels zu homogenisieren. Zu diesem Zweck wird die optische Kopplungsvorrichtung, die einen um 180 Grad gebogenen, langen Lichtleiterstab umfasst, innerhalb der Lichtleiterstrecke in das Faserbündel eingebaut, wobei das Eingangsende wie auch das Ausgangsende der optischen Kopplungsvorrichtung mittels einer Verbindungshülse fest mit den Enden des Faserbündels der Lichtleiterstrecke verbunden ist.

Die US-6,692,250 beschreibt einen Lichtkonzentrator, der das Licht einer Vielzahl von Leuchtdioden jeweils mittels einzelner dünner Lichtleiterfasern abgreift und diese dann in einem Faserbündel zusammenführt, um dann die Lichtströme der einzelnen Leuchtdioden in einem gebogenen Lichtleiterstab einzuspeisen und zu vereinigen, wo eine Homogenisierung der Lichtströme der einzelnen Leuchtdioden und eine gleichmäßige Umverteilung zwischen den einzelnen Fasern des Faserbündels stattfindet.

Demgegenüber besteht die Aufgabe der vorliegenden Erfindung darin, eine Einrichtung, insbesondere für eine medizinische oder dentalmedizinische Beleuchtungsvorrichtung, insbesondere für eine Lichthärtvorrichtung zum Polymerisieren von Dentalmassen, anzugeben, die es erlaubt, das in einer Lichterzeugungseinrichtung erzeugte Licht zu homogenisieren und zu mischen und über die gesamte Querschnittsfläche des Lichtleiters zu verteilen, so dass am Ausgang des Lichtleiters eine Fläche homogen hinsichtlich Helligkeit und spektraler Verteilung ausgeleuchtet werden kann. Ferner soll diese Einrichtung dabei auch eine wirkungsvolle, einfache und verlustarme Einkopplung des emittierten Lichts, wie es insbesondere von mehreren Leuchtdioden oder anderen Halbleiterstrahlungsquellen erzeugt wird, in einen Lichtleiter, der vorzugsweise als Faserbündel vieler dünner einzelner Lichtleitfasern ausgebildet ist, ermöglichen.

Eine weitere Aufgabe besteht darin, eine geeignete Anordnung für medizinische oder dentalmedizinische Beleuchtungsvorrichtungen, insbesondere für Lichthärtvorrichtungen zum Polymerisieren von Dentalmassen, anzugeben, die eine Sterilisierung sämtlicher potenziell mit einem Patienten in Berührung kommender Teile nach allen gängigen Methoden der medizinischen Technik erlaubt und welche auch insbesondere nach allen gängigen Methoden autoklaviert werden kann, ohne dass optische Konstruktion, Lichterzeugungseinrichtung, Elektronik oder sonstige Komponenten der Beleuchtungsvorrichtung oder Lichthärtvorrichtung Schaden nehmen oder an Qualität einbüßen. Dabei ist insbesondere auch den Aspekten der Handhabbarkeit während des Einsatzes bzw. während der Behandlung eines Patienten beispielsweise durch einen Arzt, medizinisches Fachpersonal oder Zahntechniker sowie zwischen den Einsätzen bzw. zwischen den Behandlungen von Patienten, wobei berufspraktischen Routinevorgängen wie Sterilisation, Autoklavieren oder Umrüstvorgängen, beispielsweise beim Austausch von Lichtleitern im besonderen Maße Rechnung zu tragen.

Diese Aufgabe wird erfindungsgemäß für eine medizinische oder dentalmedizinische Dentalbeleuchtungsvorrichtung, insbesondere für eine Lichthärtvorrichtung zum Polymerisieren von Dentalmassen, durch eine Lichtmischeinrichtung gemäß Anspruch 1 gelöst. Ferner wird in Anspruch 13 zur erfindungsgemäßen Lösung dieser Aufgabe auch eine entsprechende medizinische oder dentalmedizinische Beleuchtungsvorrichtung, insbesondere Lichthärtvorrichtung zum Polymerisieren von Dentalmassen mit einer dementsprechenden Lichtmischeinrichtung gemäß Anspruch 1, angegeben.

Vorteilhafte Weiterbildungen ergeben sich aus dem Beschreibungstext und insbesondere aus den angegebenen Unteransprüchen. Sämtliche offenbarten technischen Merkmale aus Beschreibungstext und Unteransprüchen sind dabei nach den Fachkenntnissen des einschlägigen Fachmanns frei miteinander kombinierbar und können in Verbindung mit den Merkmalen der unabhängigen Ansprüche 1 bzw. 13 gemeinsam technisch realisiert werden.

Es ist dabei besonders günstig, dass sich bei Verwendung der erfindungsgemäßen Lichtmischeinrichtung überraschenderweise die Vorteile von monocoren und multicoren Lichtleitern gleichzeitig erzielen lassen, ohne dass dies mit den zu erwartenden Nachteilen zu erkaufen wäre. Die bei multicoren Lichtleitern bestehende schlechte Lichtdurchmischung wird vollständig vermieden, ebenso wie die nur partielle Lichtbeaufschlagung von Fasern innerhalb des Faserbündels, die bei entsprechenden Geräten nach dem Stand der Technik primär auf die zentralen Lichtleiterfasern erfolgen muss, um Bypass-Verluste in Grenzen zu halten. Ebenfalls ist es nicht erforderlich, eine Sammellinse eingangseitig zu verwenden; vielmehr kann die von dem oder den LED-Chips emittierte Lichtstrahlung unmittelbar der Lichtmischeinrichtung zugeleitet werden. Diese nimmt sie aufgrund der vergleichsweise großen Lichteintrittsfläche vollständig auf und leitet sie nach vorne.

In diesem Zusammenhang wäre es auch möglich, in einer modifizierten Ausgestaltung der Erfindung, mehr als einen multicoren und/oder monocoren Abschnitt eines Lichtleiters miteinander zu verbinden. Dies ist beispielsweise dann günstig, wenn der Lichtleiter sehr lang ist und über seinen Verlauf Stellen aufweist, an denen er stark gebogen werden muss. Dort sind dann multicore und im Übrigen monocore Abschnitte ausgebildet. Ebenso wäre es auch denkbar, mehrere der erfindungsgemäßen Lichtmischeinrichtungen innerhalb des Strahlengangs anzuordnen.

Während typischerweise Lichtleitfasern eine 15 % geringere Lichtausbeute bieten als monocore Lichtleiter, ist es erfindungsgemäß vorgesehen, diese Ausbeuteverluste erheblich zu reduzieren. Wenn lediglich das vordere, also lichtaustrittseitige Drittel des Lichtleiters multicor und die rückwärtigen zwei Drittel des Lichtleiters monocor ausgebildet sind, sind die Ausbeuteverluste von 15 % auf 5 % reduziert.

Besonders günstig ist es auch, das erfindungsgemäß verhindert wird, dass ein Bild der LED-Chips durch Lichtleitfasern oder multicore Lichtleiter abgebildet wird. In der erfindungsgemäßen Lichtmischeinrichtung wird eine starke Durchmischung der eingespeisten Lichtstrahlung erzeugt, und so für eine Homogenisierung und Lichtvergleichmäßigung gesorgt.

Somit lassen sich bei Realisierung mehrerer verschiedenfarbiger LED-Chips, die in der Lichterzeugungseinrichtung der Beleuchtungsvorrichtung oder Lichthärtvorrichtung angeordnet sind, eine Vielzahl erwünschter unterschiedlicher Emissionsspektren bereitstellen, und zwar ohne dass hierfür eine zusätzliche Sammellinse und weitere aufwendige Homogenisationseinrichtungen eingesetzt werden müssten. Dies gilt insbesondere auch für die typischerweise im Dreieck angeordneten, verschiedenfarbigen Lichtleiterchips, die beispielsweise Ihre Emissionsmaxima im roten, grünen und blauen Spektralbereich aufweisen und aus denen jegliche Lichtfarbe durch additive Lichtmischung erzeugt werden kann.

Durch die erfindungsgemäße Einrichtung bzw. Vorrichtung können darüber hinaus auch alle bisherigen Probleme des Standes der Technik hinsichtlich des Sterilisierens durch Autoklavieren vermieden werden, welche insbesondere durch die hohe Sterilisierungstemperatur, Temperaturwechsel, hohe Drücke und tarke Druckwechsel, sowie die Befeuchtungs- und Rücktrocknungsprobleme von Oberflächen und Hohlräumen, sowie weiterhin Probleme hinsichtlich Alterung und Versprödung von Komponenten, mangelhafte Desinfektion in Spalten und Hohlräumen, Probleme mit luftgefüllten oder flüssigkeitsgefüllten Hohlräumen usw. bedingt sind.

Weiterhin kann auf einfache Weise eine Reinfektion sterilisierter Komponenten ausgeschlossen werden, da der abnehmbare Lichtleiter reinfektionssicher in sterilen Aufbewahrungsgefäßen bis zum Einsatz verbleiben kann. Ein weiter Vorteil ergibt sich aus dem geringen Platzbedarf beim Autoklavieren, da hierfür lediglich die vom Gerät abgenommenen Lichtleiter der Sterilisationsbehandlung unterzogen werden müssen, wobei zweckmäßigerweise auch eine Mehrzahl von kontaminierten Lichtleitern gesammelt werden kann, bevor diese einer gemeinsamen Behandlung im Autoklaven unterzogen werden.

Ein weiterer Vorteil der erfindungsgemäßen Lösung ist, dass eine Schädigung oder Dejustierung der optischen Komponenten im Strahlengang der Lichtführung derartiger Geräte, wie sie sonst im Stand der Technik durch die Hitzeentwicklung beim Betrieb, sowie beim Autoklavieren eintreten kann, zuverlässig vermieden wird. Hierbei kam es bislang bei gängigen Beleuchtungs- und Lichthärtvorrichtungen durch die thermische Ausdehnung der unterschiedlichen Materialien einerseits - unterschiedliche optische Gläser mit geringen Ausdehnungskoeffizienten, Metallhalterungen und Kunststoffkomponenten mit hohen thermischen Ausdehungskoeffizienten - zu starken Spannungen, Rissen, Brüchen und Dejustierungen.

Ein weiterer Vorteil der erfindungsgemäßen Lösung besteht darin, dass ein sonst zwingend erforderliches Schutzglas, welches die Leuchtdioden oder Halbleiterstrahlungsquellen, sowie die zugeordneten Reflektoren zuverlässig vor Verschmutzung, Feuchte und Beschädigungen schützt, entfallen kann, wenn an dessen Stelle eine erfindungsgemäße Lichtmischeinrichtung angeordnet ist. Dabei ist es vorteilhafterweise sogar möglich, die bewährte Einstichkupplungslösung herkömmlicher Lichtleiter nach dem Stand der Technik mit einer Buchse im Beleuchtungs- oder Lichthärtgerät, sowie einer Hülse am Lichtleiter beizubehalten und den bewährten konstruktiven Aufbau der entsprechenden Geräte weiter zu verwenden. Durch die erfindungsgemäße Lösung kommt es nicht zu einer Vergrößerung der Bauform der Geräte oder zu einer nennenswerten Gewichtserhöhung, so dass Kompaktheit und Handlichkeit der entsprechenden Geräte in vollem Umfang erhalten bleiben.

Ebenso lässt sich die erfindungsgemäße Lösung äußerst kostengünstig und mit nur minimalen konstruktiven Veränderungen in allen herkömmlichen Geräte integrieren. Darüber hinaus ist auch eine sehr einfache Montage oder Austausch von Lichtleitern in der ärztlichen oder zahnärztlichen Praxis oder beispielsweise im Dentallabor möglich. Zudem ist die erfindungsgemäße Lösung auch überaus wartungsfreundlich in der Servicewerkstatt.

Erstaunlicherweise lässt sich mit der erfindungsgemäßen Lichtmischeinrichtung, trotz Ihres einfachen Aufbaus und ihrer sehr kurzen Baulänge, d. h. auch sehr kurzen Lichtmischstrecke innerhalb des Lichtmischkörpers - insbesondere im Zusammenspiel mit der im Stand der Technik üblichen Reflektoranordnung in der Lichterzeugungseinrichtung der Geräte - sowie durch den mehrfachen Phasenübergang bzw. Grenzflächenwechselwirkungen zwischen Festkörper und Luft und wieder Festkörper im Lichtweg des Strahlengangs eines solchen Gerätes, also beispielsweise Leuchtdiode/Luft, Luft/ Reflektor, Reflektor /Luft, Luft/ Schutzglas, Schutzglas/Luft, Luft/Lichtmischkörper, Lichtmischkörper /Luft, Luft/Faserbündel - auch durch Grenzflächenreflexionen und resultierende Laufzeitunterschiede unterschiedlicher Strahlenbündel im Strahlengang und deren Überlagerung ein unerwartet hohes Maß an Homogenisierung hinsichtlich der Intensitätsverteilung und der spektralen Emissionskurven über die gesamte Austrittsfläche des Lichtleiterfaserbündels hinweg erzielen. Gleichzeitig treten jedoch nur äußerst geringe Lichtverluste hinsichtlich der gesamten von den Leuchtdioden erzeugten Strahlungsenergie bis zum Austrittsende des Lichtleiterfaserbündels auf. Somit kann auch eine Verklebung mit einem optisch transparenten Klebstoff zwischen dem Lichtmischkörper und dem Faserbündel problemlos entfallen, ohne dass dies mit höheren Lichtverlusten zu erkaufen wäre.

Dadurch wiederum lassen sich nicht nur die Kosten in Herstellung und Betrieb senken, sondern insbesondere auch das Lichtleitfaserbündel unabhängig von der Lichtmischeinrichtung handhabbar gestalten. Und wiederum erst hierdurch ist eine vollständige vorteilhafte Lösung der der Erfindung zu Grunde liegenden Aufgabe möglich und können die Vorteile bei Handhabung, Hygiene und Sterilisation verwirklicht werden.

Auch eine früher bereits vorgeschlagene Lösung der Sterilisationsprobleme durch Verwendung von autoklavierbaren Überzügen oder Einwegüberzügen über die Lichtleitvorrichtungen mit ihren bekannten Nachteilen wird durch die hier vorgeschlagene Lösung obsolet. Jegliche Probleme hinsichtlich der unterschiedlichen Ausdehnungskoeffizienten der Werkstoffe Glas, Kunststoff, Metall, die insbesondere an Verbindungsstellen zwischen den verschiedenen Komponenten im optischen Strahlungsgang auftreten, also beispielsweise zwischen Lichtmischkörper und Faserbündel, können durch die erfindungsgemäße Lösung konstruktiv vermieden werden.

Ein weiterer Vorteil der erfindungsgemäßen Lösung besteht darin, dass die Verwendung teurer Faserbündel mit randomisierter Anordnung der Einzelfasern zukünftig nicht mehr notwendig ist, wodurch einerseits erhebliche Kosten bei der Fertigung der Lichtleiter eingespart werden können und andererseits mechanische Probleme, wie Verdrillung und Quetschung der Fasern, durch die thermische Ausdehnung im Betrieb und beim Autoklavieren nicht mehr auftreten.

Weiterhin ist es durch die erfindungsgemäße Lösung sehr einfach und kostengünstig möglich, Beleuchtungsvorrichtungen oder Lichthärtvorrichtungen bereitzustellen deren emittierte Arbeitsspektren mittels additiver Lichtmischung der Spektren von Leuchtdioden mit unterschiedlichen Emissionsspektren durch eine entsprechende elektronische Ansteuerung der verschiedenen Leuchtdioden synthetisiert werden kann. Besonders überraschend ist, dass durch die spezifische Konstruktion der erfindungsgemäßen Lösung lediglich unter Verwendung einfachster optischer Mittel bereits ein sehr hohes Maß an Homogenisierung hinsichtlich Lichtintensität und Emissionsspektren über den gesamten Beleuchtungsquerschnitt erzielt werden kann und gleichzeitig der Wirkungsgrad der Lichtübertragung verbessert und die Verlustleistung verringert werden kann.

Vorteilhafterweise kann die erfindungsgemäße Lichtmischeinrichtung optimal im Bezug auf die Leuchtdioden oder Halbleiterstrahlungsquellen positioniert werden. Dabei können die Positionierungsparameter derartig gewählt werden, dass die Eintrittsfläche des Lichtmischkörpers "Out of focus" bezüglich jeweiliger Brennpunkte von den Leuchtdioden oder Halbleiterstrahlungsquellen zugeordneten Reflektoren platziert ist und einerseits möglichst vollflächig von den Eintrittsstrahlenbündeln ausgeleuchtet wird und andererseits der Eintrittswinkelbereich der eintretenden Strahlung möglichst vollständig den durch die numerische Apertur des Lichteintrittsendes des Lichtmischkörpers vorgegebenen Eintitts- oder Akzeptanzkegel ausgeschöpft wird.

Ein weiterer Aspekt, der wegen der großen Temperaturunterschiede während des Betriebs und beim Autoklavierungsvorgang bei derartigen Geräten nach dem Stand der Technik häufig zu Problemen führte, ist, dass sich die langen Fasern des Faserbündels von Lichtleitern wie sie dort üblicherweise Verwendung finden, aufgrund der Hitzeentwicklung im Betrieb und vor allem bei der Hitzeeinwirkung während des Autoklavierens entsprechend stark ausdehnen, wobei sich längere Faser naturgemäß stärker ausdehnen als kürzere Fasern. Da typischerweise gebogene oder abgekröpfte Lichtleiterfaserbündel bei derartigen Geräten verwendet werden, dehnen sich die krümmungsausseitigen, langen Fasern dieser Faserbündel entsprechend stärker aus als die krümmungsinnenseitigen, kurzen Fasern. Hierdurch kam es bei starken Temperaturänderungen zu erheblichem thermischem Verzug, der auch dazu führen konnte, dass ein in unmittelbarer Nachbarschaft angeordneter Glaskörper dejustiert oder beschädigt werden konnte. Zudem kommt es typischerweise zwischen den Glasfasern und deren Schutzumhüllung einerseits, sowie auch bezüglich der Kunststoffhülse die das gesamte Faserbündel umschließt und mechanisch stabilisiert, zu Verschiebungen und partiellem Schlupf, wodurch dauerhafte Verwerfungen der ehemals planierten und feinpolierten Lichteintritts- und Austrittsflächen auftreten, wobei im langjährigen Gebrauch aufgrund der häufigen starken Temperaturwechsel derartige Verwerfungen im Laufe der Zeit grundsätzlich zunehmen. Daraus resultieren zunehmende Verschiebungen der einzelnen Lichtleitfasern gegeneinander, sowie Verschiebungen und gegebenenfalls Verspannungen zwischen dem Faserbündel und einer gegebenenfalls daran anliegenden oder angrenzenden optischen Komponente, was zu mechanischen und optischen Problemen, sowie zu Justierungsproblemen führen kann. Auch kann dabei eine Veränderung des Abstands der Fasern des Faserbündels zu angrenzenden optischen Komponenten eintreten und sich ein unregelmäßiger Spalt mit undefiniertem, ungleichmäßigem Abstand zwischen dem Faserbündel und der angrenzenden optischen Komponente ausbilden.

Als weiterer Vorteil der erfindungsgemäßen Lösung wird jede unnötige zusätzliche Biegung im Strahlengang des Lichtwegs vermieden. Insbesondere können auch jegliche Krümmungen innerhalb eines (monocoren) Lichtleitstabs entfallen, die, wie es sich gezeigt hat, zu erheblichen zusätzlichen Lichtverlusten innerhalb des Lichtweges führen und den Wirkungsgrad beträchtlich verschlechtern.

Verglichen mit dem aus der DE 2 352 670 A1 bekannten biegsamen monocoren Lichtleiter, weist der multicore Abschnitt, wie er erfindungsgemäß zum Einsatz kommt, zudem den Vorteil auf, dass die Ausbeuteverluste im Verhältnis zum geraden Verlauf des Lichtleiters weit weniger ansteigen. Ein stark gebogener multicorer Lichtleiter hat typischerweise eine geringere Dämpfung als ein im gleichen Radius gebogener Lichtleiter, so dass erfindungsgemäß im gebogenen oder abgekröpften Abschnitt des Lichtleiters stets ein multicorer Lichtleiter zum Einsatz kommen kann. Dabei ist es besonders günstig, wenn der multicore Abschnitt, der eine Biegung aufweist oder abgekröpft ist, insbesondere dem lichtaustrittsseitigen Ende benachbart angeordnet ist.

Überraschenderweise zeigt sich zudem als Vorteil der Erfindung, dass bereits ein Lichtmischkörper mit geringer Baulänge, welche in der Größenordnung des Durchmessers des Lichtmischkörpers liegt, dazu in der Lage ist, das Licht von verschiedenfarbigen LED-Cips oder Halbleiterstrahlungsquellen oder deren unterschiedliche Emissionsspektren gut zu durchmischen, so dass gut durchgemischtes Licht in den multicoren Abschnitt des Lichtleiters eintritt und keine Farbvarianz über die Lichtaustrittsfläche des Lichtleiters feststellbar ist.

Die Lagerung des Lichtleiters gegenüber der Lichtquelle kann in einer beliebigen geeigneten Weise erfolgen, beispielsweise über eine Buchse, die auch eine Drehbarkeit des Lichtleiters gegenüber der Lichtquelle sowie dessen Abnehmbarkeit ermöglicht. Aber auch sämtliche andere Konstruktionensvarianten für die Verwendung zwischen Lichtleiter und dem Beleuchtungs- oder Lichthärtgerät, wie sie bisher im Stand der Technik vorgeschlagen wurden, lassen sich problemlos mit der erfindungsgemäßen Lösung kombinieren. Somit kann die Verbindungsschnittstelle zwischen dem Lichtleiter und der Beleuchtungs- oder Lichthärtvorrichtung in beliebiger Weise an die technischen Erfordernissen angepasst werden, ohne dass hierfür spezielle Lösugen entwickelt werden müssten.

In einer bevorzugten Ausführungsform kann der Lichtmischkörper rotationssymetrisch ausgebildet sein. Dies stellt eine konstruktiv besonders zweckmäßige Lösung dar, die zudem eine weitgehende Anpassung der optischen Eigenschaften des Lichtmischkörpers hinsichtlich der Homogenisierungsleistung bei gegebener Baulänge, beispielsweise eine Anpassung an die geometrisch optischen Strahlungsgänge, die bezüglich der Lichterzeugungseinrichtung vorgegeben sind, etwaige notwendige Anpassungen hinsichtlich der numerischen Apertur im Bezug auf das Lichteintrittsende des Lichtmischkörpers und zwischen Lichtmischkörper und Faserbündel des Lichtleiters vorgenommen werden. Außerdem ist es möglich, die Größe der Lichteintrittsfläche des Lichtmischkörpers an die Geometrie der Lichterzeugungseinrichtung einerseits anzupassen und andererseits beispielsweise die Lichtenergie auf ein Faserbündel mit geringerem Durchmesser zu konzentrieren. Des Weiteren können beispielsweise gekrümmte Wandabschnitte oder Verjüngungen im Querschnitt des Lichtmischkörpers die Reflexionswinkel der Lichtstrahlen, die innerhalb des Lichtmischkörpers total reflektiert werden, beeinflusst und modifiziert werden und durch eine höhere Zahl von Wandreflexionen des Lichts die Lichthomogenisierung innerhalb des Lichtmischkörpers weiter verbessern.

In einer weiteren bevorzugten Ausführungsform kann der Lichtmischkörper zylindrisch ausgebildet sein und vorzugsweise eine plane Lichteintritts- und/oder -austrittsfläche aufweisen. Diese Ausgestaltung des Lichtmischkörpers ist technisch besonders einfach zu realisieren und lässt sich daher sehr kostengünstig herstellen, wobei jedoch erstaunlicherweise bereits ein hohes Maß an Homogenisierung hinsichtlich der Intensitätsverteilung und der spektralen Emissionskurven über die gesamte Austrittsfläche des Lichtleiterfaserbündels hinweg erzielt werden kann.

In einer weiteren bevorzugten Ausführungsform kann die Lichteintritts- und -austrittsfläche eine polierte Oberfläche und/oder eine Oberflächenvergütung oder andere reflexionsmindernde Beschichtungen aufweisen und/oder mit einem Immersionsmittel beaufschlagbar seien. Durch eine derartige polierte Oberfläche, deren Oberflächenrestrauigkeit vorzugsweise höchstens einen kleinen Bruchteil der verwendeten Lichtwellenlänge beträgt, lassen sich die Transmissionseigenschaften des Lichtmischkörpers verbessern und Lichtverluste stark verringern. Alternativ oder zusätzlich kann weiterhin eine Oberflächenvergütung oder andere reflexionsmindernde Beschichtungen auf Lichtein- und/oder -austrittsflächen des Lichtmischkörpers angebracht seien. Durch diese Maßnahme können Lichtverluste beim Durchgang durch den Lichtmischkörper weiter verringert werden. Alternativ oder zusätzlich zu den vorgenannten Maßnahmen ist es auch denkbar, ein Immersionsmittel wie beispielsweise ein Immersionsöl zum Beispiel Silikonöl auf die entsprechenden Oberflächen des Lichtmischkörpers aufzugeben, so dass sich der Spalt zwischen dem Lichtmischkörper und beispielsweise dem Faserbündel des Lichtleiters oder dem Schutzglas über Leuchtdioden oder Halbleiterstrahlungsquellen mit zugeordneten Reflektoren mit diesem Immersionsmittel vollständig füllt und somit anstelle eines Festkörper-Luft-Festkörper-Phasenübergangs ein Festkörper-Flüssigkeits-Festkörper-Phasenübergang tritt. Durch den gegenüber Luft erhöhten Brechungsindex des Immersionsmittels können einerseits Lichtverluste durch Grenzflächenreflexion weiter verringert werden und andererseits auch Anpassungen der numerischen Apertur der aneinander anschließenden optischen Komponenten herbeigeführt werden.

In einer weiteren bevorzugten Ausführungsform kann der Lichtmischkörper einen_lichtleitenden Werkstoff aufweisen, vorzugsweise mit zumindest einen lichtleitenden Kern, insbesondere aus einem Kernglas, mit einem ersten Brechungsindex und mit einem lichtleitenden Mantel, insbesondere aus einem Mantelglas, mit einem zweiten Brechungsindex, wobei der zweite Brechungsindex geringer - vorzugsweise um mindestens 0,1 Einheiten geringer - ist, als der erste Brechungsindex. Der lichtleitende Werkstoff ermöglicht eine äußerst verlustarme Fortleitung der abgestrahlten Lichtleistung der Lichterzeugungseinrichtung und eine ebensolche effiziente Einkopplung in den Lichtleiter. Durch einen solchen koaxialen Aufbau des Lichtmischkörpers aus zwei unterschiedlichen transparenten Materialien, vorzugsweise aus zwei Glassorten, mit unterschiedlichen Brechungsindices können die Strahlungsverluste bei der Totalreflexion weiter vermindert und eine bessere Führung der Strahlung bewirkt werden. Im Unterschied zu üblichen Lichtleitern, wie sie beispielsweise im Bereich der Lichtwellenleittechnik verbreitet eingesetzt werden, besteht bei dem hier angegebenen Lichtmischkörper vorzugsweise ein deutlicher Unterschied zwischen den beiden Brechungsindizies von Kern- und Mantelschicht, der vorzugsweise mindestens 0,1 Einheiten beträgt. Ein solcher größerer Unterschied zwischen den beiden Brechungsindizies vergrößert die numerische Apertur des Lichtmischkörpers und erlaubt auch das "Einfangen" von einfallenden Lichtstrahlen, die stark vom Einfallslot der Lichteintrittsfläche des Lichtmischkörpers abweichen und gewährleistet so eine Vergrößerung des Eintrittskegels für die Strahlung der Lichterzeugungseinrichtung. Als weiterer Vorteil vergrößert sich der Winkelbereich für die Totalreflexion der im Lichtmischkörper fortgeleiteten Strahlung und der Reflexionskoeffizient verbessert sich erheblich. Anstelle von Gläsern können für Kern- und/oder Mantelbereiche des Lichtmischkörpers auch andere transparente anorganische Werkstoffe oder Keramiken aber auch organische Gläser mit oder ohne Dotierung oder transparente Kunststoffwerkstoffe eingesetzt werden.

In einer weiteren bevorzugten Ausführungsform kann der Lichtmischkörper an seiner Umfangsfläche eine reflexionserhöhende Beschichtung oder eine reflektierende Hülse aufweisen. Durch eine solche zusätzliche reflektierende Schicht können Lichtverluste innerhalb des Lichtmischkörpers weiter reduziert und gleichzeitig die numerische Apertur des Lichtmischkörpers erheblich vergrößert werden, so dass der Akzeptanzwinkel des Lichteintrittskegels des Lichtmischkörpers erheblich vergrößert werden kann. Einen weiteren Aspekt stellt es dar, dass die Reflexion der innerhalb des Lichtmischkörpers fortgeleiteten Lichtstrahlung bei diesem Ausführungsbeispiel an zwei Begrenzungsoberflächen stattfindet und damit jeder reflexiv im Lichtmischkörper fortgeleitete Lichtstrahlen jeweils in zwei gegeneinander versetzte Teilstrahlen aufgespalten wird, in einen ersten Teilstrahl der an der Grenzschicht zwischen Kern und Mantel des Lichtmischkörpers partiell total reflektiert wird, und einen zweiten Lichtstrahl, dessen Reflexion an der reflektierenden Außenschicht des Lichtmischkörpers eintritt, wodurch sich die Homogenisierungsleistung des Lichtmischkörpers noch weiter verbessert.

In einer weiteren bevorzugten Ausführungsform kann der Durchmesser des Lichtmischkörpers vorzugsweise zwischen 2 mm und 20 mm, besonders bevorzugt zwischen 6 mm und 15 mm, insbesondere zwischen 8 mm und 13 mm betragen und die Länge des Lichtmischkörpers größer sein als der 0,5-fache Durchmesser, insbesondere größer sein als der 0,8-fache Durchmesser, und vorzugsweise kleiner sein als der 5-fache Durchmesser, insbesondere kleiner sein als der 2-fache Durchmesser des Lichtmischkörpers. Diese Abmessungen stellen einen besonders günstige konstruktive Dimensionierung hinsichtlich der Geometrie des Lichtmischkörpers dar. Auf diese Weise lässt sich bei minimierten Außenabmessungen ein Optimum an Lichtdurchmischung und Homogenisierung erzielen. Außerdem tragen die angegebenen Durchmesser den geometrisch optischen Gegebenheiten bezüglich der Größe der Lichterzeugungseinrichtung und dem Eintrittsdurchmesser des Faserbündels des Lichtleiters wie er typischerweise in den angegebenen Bereichen der Medizin und Dentalmedizin zum Einsatz kommt, Rechnung.

In einer weiteren bevorzugten Ausführungsform kann der Lichtmischkörper als Hohlkörper mit reflektierender Seitenwandung ausgebildet sein. Dies stellt eine alternative Ausgestaltung gegenüber einem Lichtmischkörper dar, welcher aus einem oder mehreren transparenten Vollmaterialien hergestellt ist. In diesem Zusammenhang ist es denkbar, die entsprechende Strahlungsführung in einem offenen luftgefüllten stabförmigen Hohlkörper mit reflektierender Seitenwandung vorzunehmen, wobei ein- und ausgangsseitig des lichtmischenden Hohlkörpers beispielsweise Abdeckgläser vorgesehen sein können. Im Falle eines solchen hermetisch abgeschlossenen lichtmischenden Hohlkörpers kann dessen Innenraum aber alternativ auch mit einem Schutzgas gefüllt sein oder als Flüssigkeitslichtleiter mit einer transparenten, lichtbrechenden Flüssigkeit.

In einer weiteren bevorzugen Ausführungsform kann die Lichtmischeinrichtung eine Montagehülse - vorzugsweise mit einem hochtemperaturbestängigen Kunststoff, insbesondere einem Sulfon-, Etherketon-, oder Imid- Kunststoff, oder -Kunststoff-Verbundwerkstoff - aufweisen, mit welcher der Lichtmischkörper vorzugsweise kraftschlüssig und/oder stoffschlüssig verbunden ist, wobei die Montagehülse vorzugsweise selbstjustierend bezüglich des Lichtleiters und/oder der Lichterzeugungseinrichtung mit mindestens einer der beiden verbindbar ist. Dies stellt eine besonders vorteilhafte Ausgestaltung zur Montage des Lichtmischkörpers innerhalb des Strahlengangs der Beleuchtungsvorrichtung oder Lichthärtvorrichtung dar. Dabei kann die Montagehülse mit dem Lichtleiter und/oder am oder im Gehäuse der Beleuchtungs- oder Lichthärtvorrichtung mit der Lichterzeugungseinrichtung verbindbar sein, wobei die Montagehülse vorzugsweise derart ausgeformt ist, dass diese eine Selbstjustierung bezüglich des Lichtleiters und/oder der Lichterzeugungseinrichtung vornimmt und somit ohne zusätzlichen Montage- und Justierungsaufwand exakt innerhalb des Strahlengangs positioniert ist. Die Montagehülse ist dabei zumindest in wesentlichen Teilen vorzugsweise aus einem hochtemperaturbeständigen Kunststoff, insbesondere einem Sulfon-, Etherketon-, oder Imid-Kunststoff oder -Kunststoff-Verbundwerkstoff hergestellt. Hierdurch kann einerseits die erforderliche Temperaturbeständigkeit, mechanische Festigkeit und Formstabilität der Montagehülse gewährleistet werden und andererseits aufgrund der elastischen Eigenschaften der entsprechenden Kunststoffwerkstoffe eine Aufnahmefähigkeit für thermische Ausdehnungsbewegungen und Begrenzung thermischer Verspannungen erzielt werden. Zugleich ermöglichte eine solche Montagehülse aus einem derartigen Kunststoffwerkstoff den gezielten Einsatz von Presspassungen und/oder Vorspannungen einerseits zwischen der Montagehülse und dem Lichtmischkörper, welcher in diesem Fall vorzugsweise kraftschlüssig und/oder stoffschlüssig mit der Montagehülse verbunden sein kann wie auch zwischen der Montagehülse und dem Anschlussbauteil, an dem die Montagehülse unter Einsatz einer Presspassung und/oder Vorspannung spielfrei und sicher gegenüber Temperaturwechseln befestigt sein kann.

In einer weiteren bevorzugten Ausführungsform kann die Lichteintritts- und/oder Austrittsfläche des Lichtmischkörpers aplanar ausgebildet sein. So ist es beispielsweise denkbar, die entsprechenden Flächen des Lichtmischkörpers leicht wellenförmig oder onduliert auszuführen, beispielsweise wie die konzentrischen ringförmigen Wellen, die sich nach einem Steinwurf in einer Wasseroberfläche ausbilden. Durch eine solche Oberflächengestaltung werden dann an eintretende bzw. austretende Lichtstrahlen - im Vergleich zu einer planaren Oberfläche - alternierend in Radialrichtung des Lichtmischkörpers leicht ausgelenkt und dabei über einen größeren Winkelbereich gestreut, wodurch die Lichtmischwirkung des Lichtmischkörpers deutlich gesteigert werden kann. Eine ähnliche Wirkung ließe sich auch bei einer facettenförmigen Oberflächengestaltung oder bei einem Fresnelschliff der entsprechenden stirnseitigen Lichtmischkörperflächen erzielen. Des Weiteren wäre es aber auch denkbar, die entsprechenden Flächen des Lichtmischkörpers konvex oder konkav auszubilden um hierdurch beispielsweise die Akzeptanzwinkel für den Lichteintrittskegel zu erhöhen oder Anpassungen bezüglich der numerischen Eintritts- und/oder Austrittsapertur vorzunehmen und so beispielsweise die Divergenz des Austrittsstrahls aus dem Lichtmischkörper zu begrenzen und an die numerische Apertur des Faserbündels anzupassen.

In einer weiteren bevorzugten Ausführungsform kann die Lichtmischeinrichtung im Gehäuse der Beleuchtungsvorrichtung bzw. der Lichthärtvorrichtung montierbar sein, wobei sie vorzugsweise beim Austausch des Lichtleiters dort verbleiben kann. Dies stellt eine sowohl konstruktiv wie auch handhabungstechnisch besonders einfache Variante dar. Dabei kann der Lichtleiter einfach separat und ohne die Lichtmischeinrichtung vom Gehäuse der Beleuchtungsvorrichtung bzw. der Lichthärtvorrichtung abgenommen werden, um den Lichtleiter gegen einen anderen Typ von Lichtleiter auszutauschen oder nach dem Einsatz durch einen frisch sterilisierten Lichtleiter zu ersetzen. Außerdem ist es denkbar, bei einer im Gehäuse über der Lichterzeugungseinrichtung fest montierten Lichtmischeinrichtung, die die Lichterzeugungseinrichtung hermetisch abschließt, diese vor Feuchtigkeit und Verunreinigung und/oder Beschädigung zu schützen. So kann auf ein zusätzliches Abdeckglas über der Lichterzeugungseinrichtung verzichtet und wirkungsgradmindernde Grenzflächenreflexionen können minimiert werden.

In einer weiteren bevorzugten Ausführungsform kann die Lichtmischeinrichtung zur Nachrüstung einer Beleuchtungsvorrichtung oder einer Lichthärtvorrichtung vorgesehen und ausgebildet sein und - vorzugsweise in einer Buchse - zwischen dem Lichtleiter und dem Gehäuse der Lichterzeugungseinrichtung bzw. des Lichthärtgeräts montierbar sein. Hierdurch ergibt sich die Möglichkeit, bereits bestehende und im Einsatz befindliche Beleuchtungsvorrichtungen oder Lichthärtvorrichtungen mit der vorteilhaften erfindungsgemäßen Lichtmischeinrichtung nachzurüsten und somit in ihrer Leistungsfähigkeit zu verbessern und auch nachträglich mit den erfindungsgemäßen Vorteilen auszustatten.

Weiterhin wird eine medizinische oder dentalmedizinische Beleuchtungsvorrichtung, insbesondere Lichthärtvorrichtung zum Polymerisieren von Dentalmassen, mit einem Gehäuse mit einer Lichterzeugungseinrichtung, einem Lichtleiter, sowie einer Lichtmischeinrichtung welche zwischen der Lichterzeugungseinrichtung und dem Lichtleiter angeordnet ist, zur Lösung der erfindungsgegenständlichen Aufgabe angegeben, wobei die Lichtmischeinrichtung die Merkmale vorgenannter Lichtmischeinrichtungen aufweist.

In einer vorteilhaften Ausgestaltung kann die Lichtmischeinrichtung im Gehäuse der Beleuchtungsvorrichtung bzw. der Lichthärtvorrichtung montierbar sein, wobei der Lichtleiter mittels einer Lagerhülse am Gehäuse befestigt und von Gehäuse und Lichtmischeinrichtung trennbar und nach dem Trennen insbesondere zusammen mit der Lagerhülse autoklavierbar ist. Diese Ausgestaltung ist konstruktions-, montage- und handhabungstechnisch besonders günstig und ermöglicht die vorgenannten Vorteile. Dabei kann der Lichtleiter einfach separat und ohne die Lichtmischeinrichtung vom Gehäuse der Beleuchtungsvorrichtung bzw. der Lichthärtvorrichtung abgenommen werden, um den Lichtleiter gegen einen anderen Typ von Lichtleiter auszutauschen oder nach dem Einsatz durch einen frisch sterilisierten Lichtleiter zu ersetzen. Außerdem ist es denkbar, bei einer im Gehäuse über der Lichterzeugungseinrichtung fest montierten Lichtmischeinrichtung, die die Lichterzeugungseinrichtung hermetisch abschließt, diese vor Feuchtigkeit und Verunreinigung und/oder Beschädigung zu schützen. So kann auf ein zusätzliches Abdeckglas über der Lichterzeugungseinrichtung verzichtet und wirkungsgradmindernde Grenzflächenreflexionen können minimiert werden.

In einer weiteren vorteilhaften Ausgestaltung der medizinschen oder dentalmedizinischen Beleuchtungsvorrichtung, insbesondere Lichthärtvorrichtung zum Polymerisieren von Dentalmassen, kann zwischen der Lichtmischeinrichtung und dem Lichtleiter eine Justier- und/oder Andruckeinrichtung angeordnet sein, durch welche - zumindest mittelbar - der Lichtleiter und die Lichtmischeinrichtung lösbar und vorzugsweise elastisch verbindbar sind. Dabei ist es einerseits möglich, eine solche Justier- oder Andruckeinrichtung vorzusehen, mit der die Lichtmischeinrichtung mit dem Lichtleiter in geometrisch optisch definierter Weise verbunden ist, wobei die Lichtmischeinrichtung beim Entfernen des Lichtleiters zusammen mit diesem gemeinsam aus dem Gerät entfernt wird und erst im Zuge des Autoklaviervorgangs, vorzugsweise vor dem Autoklavieren, vom Lichtleiter getrennt wird. Vorzugsweise ist jedoch die Lichtmischeinrichtung im Gehäuse vor der Lichterzeugungseinrichtung angeordnet und dort befestigt und der Lichtleiter wiederum mittels einer Lagerhülse beispielsweise mittels einer als Einstichverbindung ausgebildeten Buchsen-Hülsen-Konstruktion wiederum mit dem Gehäuse verbunden. Dabei könnte dann vorzugsweise mittels der Einstichkonstruktion die vorgenannte Justier- und/oder Andruckeinrichtung ausgebildet sein durch welche mittelbar der Lichtleiter gegenüber der Lichtmischeinrichtung lösbar positioniert und justiert wird, wobei die entsprechende Verbindung in arretiertem Zustand vorzugsweise zudem elastisch ausgebildet ist. Hierdurch kann eine einfache und zuverlässige Justierung und Positionierung der genannten optischen Bauteile gewährleistet werden, wobei aufgrund der Elastizität eine Vorspannung aufgebaut werden kann, die eine spielfreie Positionierung der optischen Bauteile über den gesamten Einsatztemperaturbereich hinweg zuverlässig gewährleistet.

In einer weiter bevorzugten Ausführungsform der medizinischen oder dentalmedizinischen Beleuchtungsvorrichtung, insbesondere Lichthärtvorrichtung zum Polymerisieren von Dentalmassen, kann durch die Justier- und/oder Andruckvorrichtung der Lichtleiter mit einem Anpressdruck in Richtung auf die Lichtmischeinrichtung beaufschlagbar sein, wodurch die Lichtaustrittsfläche des Lichtmischkörpers bezüglich der Lichteintrittsfläche des Lichtleiters definiert positionierbar ist. Bei dieser Ausführungsform gewährleistet die Justier- und/oder Andruckvorrichtung einen definierten Anpressdruck und damit eine definierte Vorspannung zwischen Lichtleiter und Lichtmischeinrichtung, welche so über den gesamten Einsatztemperaturbereich hinweg zuverlässig und spielfrei zueinander positioniert werden können. Dabei ist es beispielsweise auch denkbar, zwischen jeweiligen planierten Oberflächen höchster Güte von Lichtmischeinrichtungen und Lichtleiter einen Anschlag vorzusehen oder einen dünnen Spacer im Außenumfangsbereich von einer der beiden optischen Oberflächen aufzubringen oder aufzudampfen, um einen definierten, konstanten Spalt zwischen der Austrittsfläche der Lichtmischeinrichtung und der Eintrittsfläche des Lichtleiters einzustellen und vorzugeben. Im Falle eines Mikrospacers der beispielsweise durch Aufdampfen auf einer der beiden optischen Oberflächen erzeugt werden kann, könnte dabei auch ein submikroskopischer Spalt von weniger als ein Viertel der Wellenlänge erzeugt werden, wodurch sich Grenzflächenreflexionen an den optischen Oberflächen von Lichtmischkörper und Lichtleiter weitestgehend eliminieren ließen. Üblicherweise wird es jedoch ausreichend sein" einen Spalt in der Größenordnung von ungefähr 100 bis 200 µm einzustellen.

In einer weiteren bevorzugten Ausführungsform der medizinischen oder dentalmedizinischen Beleuchtungsvorrichtung, insbesondere Lichthärtvorrichtung zum Polymerisieren von Dentalmassen, kann die Justier- und/oder Andruckvorrichtung zwischen der Lichtmischeinrichtung und dem Lichtleiter eine elastische Dehnungsreserve, insbesondere zur Aufrechterhaltung des Anpressdrucks und/oder zur Gewährleistung der Justierung bei gleichzeitiger Ausgleichsfähigkeit für thermische Ausdehnungsbewegungen aufweisen. Durch eine solche elastische Dehnungsreserve kann eine besonders zuverlässige Positionierung und Justierung zwischen Lichtleiter und Lichtmischeinrichtung bei allen Temperaturen und allen Einsatzbedingungen gewährleistet und aufrechterhalten werden, wobei aufgrund der Elastizität eine Vorspannung aufgebaut werden kann, die eine spielfreie Positionierung der optischen Bauteile über den gesamten Einsatztemperaturbereich hinweg zuverlässig gewährleistet.

In einer weiteren bevorzugten Ausführungsform der medizinischen oder dentalmedizinischen Beleuchtungsvorrichtung, insbesondere Lichthärtvorrichtung zum Polymerisieren von Dentalmassen, kann die Justier- und/oder Andruckeinrichtung mindestens ein Federelement, insbesondere ein Ringfederelement, aufweisen, welches mit Ausnehmungen von Hülse oder Buchse, insbesondere mit Ringnuten von Hülse und Buchse verrastet, wobei das Federelement mit der Ausformung und/oder Anordnung der Ausnehmungen, insbesondere Ringnuten, derart zusammenwirkt, dass ein Anpressdruck des Lichtleiters gegen den Lichtmischkörper in axialer Richtung desselben erzeugbar ist. Dies stellt eine besonders einfache, zuverlässige und bewährte konstruktive Ausführungsform für eine derartige Justier- und/oder Andruckeinrichtung dar. Vorzugsweise könnte ein solches Ringfederelement beispielsweise als O-Ring aus einem hochelastischen Silikonwerkstoff zum Einsatz kommen, wobei entsprechende Ringnuten von Hülse und Buchse in der Weise leicht axial versetzt gegeneinander angeordnet sind, dass der Silikon-O-Ring nicht nur in Radial-, sondern auch in Axialrichtung beim Einstecken und Einrasten in der Weise vorgespannt wird, dass er den vorbeschriebenen axialen Anpressdruck der beiden optischen Komponenten gegeneinander bzw. gegen einen entsprechenden Anschlag gewährleistet und so für eine exakte Beabstandung der jeweiligen Oberflächen sorgt. Es wäre jedoch auch denkbar, derartige Federelemente in vielfältiger anderer Form auszugestalten und beispielsweise federkraftbeaufschlagte, radial geführte Kugeln im Buchsenbereich des Gehäuses vorzusehen, welche mit einer entsprechenden Ringnut in der Hülse des Lichtleiters verrasten können. Es ist jedoch von Vorteil wenn die Justier- und/oder Andruckvorrichtung derart ausgebildet ist, dass die Buchse des Lichtleiters gegenüber dem Gehäuse der Beleuchtungsvorrichtung und/oder Lichthärtvorrichtung verdrehbar, wie auch abnehmbar gelagert ist.

Im Übrigen kann es auch von Vorteil sein, Lichtleiter bereitzustellen, die über ihre gesamte Länge oder in einem Teilbereich multicore ausgeführt sind und dabei gleichzeitig zumindest in Teilbereichen konische Einzelfasern aufweisen oder in denen ein konisch verlaufender monocorer Lichleitabschnitt eingesetzt ist, so dass sich ein solcher Lichtleiter insbesondere zum lichtaustrittsseitigen Ende hin verjüngt und somit die gesamte Strahlungsleistung der Lichterzeugungseinrichtung auf eine kleinere Fläche austrittseitig konzentriert, wodurch die Leistungs- und Energiedichte der beleuchteten oder licht- bzw. strahlungsbeaufschlagten Fläche erhöht wird.

Die vorliegende Erfindung wird im Folgenden anhand der in den anliegenden Zeichnungen dargestellten Ausführungsformen näher erläutert.
Weitere Vorteile, Einzelheiten und Merkmale ergeben sich aus der nachfolgenden Beschreibung des exemplarischen Ausführungsbeispiels der Erfindung anhand der Zeichnung.

Es zeigt:

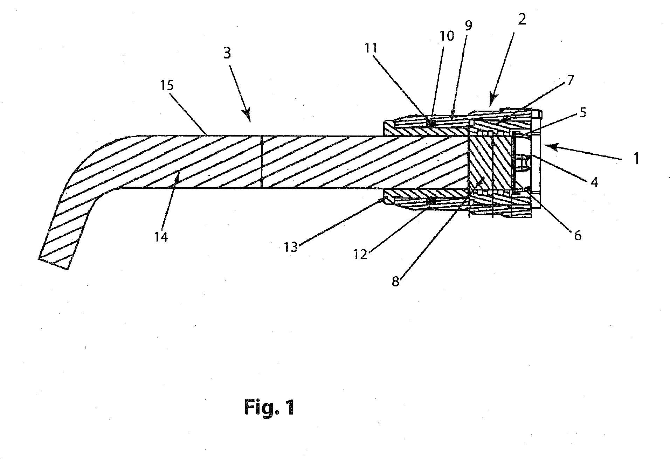

- Fig. 1:: eine schematische Schnittansicht durch eine Ausführungsform einer erfindungsgemäßen Lichtmischeinrichtung, welche zwischen einer Lichterzeugungseinrichtung eines Lichthärtgeräts zum Polymerisieren von Dentalmassen und ein Lichtleiter zur Bestrahlung der zu härtenden Dentalmasse montiert ist.

Fig. 1 zeigt eine Lichterzeugungseinrichtung 1 eines Lichthärtgeräts zum Polymerisieren von Dentalmassen mit daran im Strahlengang anschließend montierter Lichtmischeinrichtung 2, welche sich zwischen der Lichterzeugungseinrichtung 1 und dem Lichtleiter 3 befindet. Die Lichterzeugungseinrichtung 1 weist einen Träger mit darauf angeordneten Leuchtdioden 4 auf, welche sich hinsichtlich ihres Emissionsspektrums voneinander unterscheiden. Das Licht der Leuchtdioden wird dabei von Reflektoren 5 in Richtung auf Lichtmischeinrichtung und Lichtleiter gebündelt. Vor diesen Leuchtdioden 4 und Reflektoren 5 befindet sich ein mineralisches Schutzglas 6, welches beidseitig eine Antireflexionsvergütung trägt, um Lichtverluste und Reflexionen beim eintritts- wie austrittsseitigen Phasenübergang des Lichtes zwischen Luft und Festkörper bzw. Festkörper und Luft zu minimieren.

Die Lichtmischeinrichtung 2 weist einen Halter 7 aus einem temperaturbeständigen Kunststoff, wie etwa faserverstärktem Polysulfon-Kunststoff, sowie den Lichtmischkörper 8 auf. Mittels des Halters 7 wird dabei der Lichtmischkörper 8 in einem definierten Abstand von 100 µm bis 200 (m im Lichtweg hinter dem Schutzglas 6 im Gehäuse angeordnet und gehaltert. Der Lichtmischkörper weist einen Durchmesser von 10 mm und eine Länge von 8 mm auf und deckt damit die gesamte Fläche der Lichterzeugungseinrichtung 1 einschließlich der Reflektoren 5 bis zu deren lichtaustrittsseitiger innerer Außenkontur vollständig ab. Der Lichtmischkörper 8 besteht dabei (zeichnerisch nicht dargestellt) aus einem inneren Kern aus einem hochbrechenden Kernglas mit einem Brechungsindex von 1,6, koaxial umgeben von einer Mantelglasschicht mit einem Brechungsindex von 1,5, welche außenumfangsseitig zusätzlich eine Verspiegelung und - daran nach außen anschließend - eine dünne Kunststoff-Schutzbeschichtung trägt.

Der gesamte Lichtmischkörper 8 ist dabei zylinderförmig ausgestaltet, mit plan geschliffenen und fein polierten Lichteintritts- und Austrittsflächen, deren Oberflächenrestrauigkeit in einem Bereich von unter 100 nm liegt und die weiterhin eine Anti-Reflexionsbeschichtung aufweisen. Der Lichtmischkörper 8 wird kraftschlüssig innerhalb des Halters 7 fixiert und ist dabei zusätzlich mit einem Spezialklebestoff gesichert und hermetisch gegenüber dem Halter gedichtet. Den Halter 7 umschließt radial eine Kunststoffbuchse 9, welche im Gehäuse (nicht dargestellt) befestigt ist und Teile der Einstichhalterung für den Lichtleiter 3 darstellt. Die zylindrische Kunststoffbuchse 9 weist innenumfangsseitig eine Ringnut 10 auf, in welcher ein Silikon O-Ring 11 einliegt. Dieser O-Ring 11 ist mit einer korrespondierenden Ringnut 12 in einem Kunststoffhülsenteil 13 aus einem faserverstärkten Polysulfonkunststoff in Rastverbindung und hält somit das Hülsenteil in Position und unter Vorspannung gegenüber der Lichtmischeinrichtung 2. Innerhalb der Kunststoffhülse 13, welche hohl ausgeführt ist, befindet sich der Lichtleiter 3, welcher ein konifiziertes Faserbündel 14 und eine das gesamte Faserbündel umschließende und stoffschlüssig verbundene, schützende und aussteifende Kunststoffumhüllung 15 aufweist, welche letztere wiederum stoffschlüssig mittels Verklebung mit der Kunststoffhülse 13 verbunden ist.

In diesem Ausführungsbeispiel wird die Justierung zwischen der Lichteintrittsoberfläche des Lichtleiters 14 und der Lichtaustrittsoberfläche des Lichtmischkörpers 8 indirekt vorgenommen, indem die Kunststoffhülse 13 an deren distalem Ende einen Kragen aufweist, welcher durch den O-Ring 11 vorspannungsbeaufschlagt gegen die Kunststoffbuchse 9 in Anschlag gebracht wird, wobei innerhalb der Kunststoffbuchse 9 der Lichtmischkörper 8 über seinen Halter 7 positionstreu, jedoch um die Axialachse drehbeweglich veranschlagt und fixiert ist. Auf diese Weise wird auch zwischen der lichtaustrittsseitigen Oberfläche des Lichtmischkörpers 8 und der lichteintrittsseitigen Oberfläche des Lichtleiters 14 eine konstante Beabstandung von etwa 100 (m gewährleistet. Der Lichtleiter 3 ist dabei über seine Kunststoffhülse 13 drehbar in der Kunststoffhalterung 9 mit ihrem O-Ring 10 aus hochelastischem Silikon aufgenommen. Der lichteintrittsseitige Durchmesser des Faserbündels 14 entspricht dabei genau dem lichtaustrittsseitigen Durchmesser des Lichtmischkörpers 8 und beträgt 10 mm, während sich das distale Ende des Faserbündels 14 bis zur Lichtaustrittsstelle gleichmäßig bis auf 8 mm verjüngt. Die Leuchtdioden 4 sind getrennt elektronisch ansteuerbar, um ihre Leistung getrennt voneinander einstellen und überwachen zu können, einerseits damit die Leuchtdioden bis in den Grenzleistungsbereich betrieben werden können ohne diese zu überlasten oder zu beschädigen, und andererseits um ihre Lichtleistung unabhängig regeln zu können. Hierdurch können Leuchtdioden mit unterschiedlichen Emissionsspektren so angesteuert werden, dass durch additive Farbmischung eine gewünschte Lichtfarbe und/oder ein gewünschtes Emissionsspektrum durch die Mehrzahl an Leuchtdioden bereitgestellt und innerhalb des Lichtmischkörpers 8 gemischt und homogenisiert werden kann. Der Lichtleiter 3 weist nahe seinem distalen Ende eine Krümmung mit einer Abwinkelung um ca. 60 Grad gegenüber der Lichteintrittsachse auf.

Alle Angaben und Werte der beschriebenen Ausführungsform sind lediglich beispielhaft zu verstehen und können innerhalb des Schutzbereichs der Ansprüche verändert werden. Auch wenn hier die Erfindung anhand des Einsatzes in einem dentalen Lichthärtgerät beschrieben ist, versteht es sich, dass die grundsätzlichen Gedanken der Erfindung auch bei anderen Geräten, die einen Lichtleiter erfordern, in vorteilhafter Weise angewandt werden, insbesondere bei medizinischen Geräten wie beispielsweise Endoskopen oder anderen Lichtquellen für beispielsweise die medizinische Forschung, den Einsatz im Labor oder industrielle Zwecke.

## Patentansprüche

1. Lichtmischeinrichtung für eine medizinische oder dentalmedizinische Beleuchtungsvorrichtung, insbesondere für eine Lichthärtvorrichtung zum Polymerisieren von Dentalmassen, welche Vorrichtung ein Gehäuse mit einer Lichterzeugungseinrichtung, sowie einen Lichtleiter aufweist,
**dadurch gekennzeichnet, dass** die Lichtmischeinrichtung (2) einen stabförmigen Lichtmischkörper (8) vorzugsweise mit mindestens einem transparenten Material, insbesondere Glas, sowie einen Halter (7) aufweist, durch welche die Lichtmischeinrichtung (2) zwischen der Lichterzeugungseinrichtung (1) und dem Lichtleiter (3) montierbar ist und vom Lichtleiter (3) trennbar in Position gehalten wird.

2. Lichtmischeinrichtung für eine medizinische oder dentalmedizinische Beleuchtungsvorrichtung, insbesondere für eine Lichthärtvorrichtung zum Polymerisieren von Dentalmassen, nach Anspruch 1, **dadurch gekennzeichnet, dass** der Lichtmischkörper (8) rotationssymmetrisch ausgebildet ist.

3. Lichtmischeinrichtung für eine medizinische oder dentalmedizinische Beleuchtungsvorrichtung, insbesondere für eine Lichthärtvorrichtung zum Polymerisieren von Dentalmassen, nach einem der Ansprüche 1 oder 2, **dadurch gekennzeichnet, dass** der Lichtmischkörper (8) zylindrisch ausgebildet ist und vorzugsweise eine plane Lichteintritts- und/oder -austrittsfläche aufweist.

4. Lichtmischeinrichtung für eine medizinische oder dentalmedizinische Beleuchtungsvorrichtung, insbesondere für eine Lichthärtvorrichtung zum Polymerisieren von Dentalmassen, nach einem der Ansprüche 1 bis 3, **dadurch gekennzeichnet, dass** die Lichteintritts- und/oder -austrittsfläche eine polierte Oberfläche und/oder eine Oberflächenvergütung oder reflexionsmindernde Beschichtung aufweist und/oder mit einem Immersionsmittel beaufschlagbar ist.

5. Lichtmischeinrichtung für eine medizinische oder dentalmedizinische Beleuchtungsvorrichtung, insbesondere für eine Lichthärtvorrichtung zum Polymerisieren von Dentalmassen, nach einem der Ansprüche 1 bis 4, **dadurch gekennzeichnet, dass** der Lichtmischkörper (8) einen lichtleitenden Werkstoff aufweist, vorzugsweise mit zumindest einen lichtleitenden Kern, insbesondere aus einem Kernglas, mit einem ersten Brechungsindex, und mit einen lichtleitenden Mantel, insbesondere aus einem Mantelglas, mit einem zweiten Brechungsindex, wobei der zweite Brechungsindex geringer - vorzugsweise um mindestens 0,1 Einheiten geringer - ist, als der erste Brechungsindex.

6. Lichtmischeinrichtung für eine medizinische oder dentalmedizinische Beleuchtungsvorrichtung, insbesondere für eine Lichthärtvorrichtung zum Polymerisieren von Dentalmassen, nach einem der Ansprüche 1 bis 5, **dadurch gekennzeichnet, dass** der Lichtmischkörper (8) an seiner Umfangsfläche eine reflexionserhöhende Beschichtung oder eine reflektierende Hülse aufweist.

7. Lichtmischeinrichtung für eine medizinische oder dentalmedizinische Beleuchtungsvorrichtung, insbesondere für eine Lichthärtvorrichtung zum Polymerisieren von Dentalmassen, nach einem der Ansprüche 1 bis 6, **dadurch gekennzeichnet, dass** der Durchmesser des Lichtmischkörpers (8) vorzugsweise zwischen 2 mm und 20 mm, besonders bevorzugt zwischen 6 mm und 15 mm, insbesondere zwischen 8 mm und 13 mm beträgt und die Länge des Lichtmischkörpers (8) größer ist, als der 0,5-fache Durchmesser, insbesondere größer ist, als der 0,8-fache Durchmesser, und vorzugsweise kleiner ist, als der 5-fache Durchmesser, insbesondere kleiner ist, als der 2-fache Durchmesser des Lichtmischkörpers (8).

8. Lichtmischeinrichtung für eine medizinische oder dentalmedizinische Beleuchtungsvorrichtung, insbesondere für eine Lichthärtvorrichtung zum Polymerisieren von Dentalmassen, nach einem der Ansprüche 1 bis 7, **dadurch gekennzeichnet, dass** der Lichtmischkörper (8) als Hohlkörper mit reflektierender Seitenwandung ausgebildet ist.

9. Lichtmischeinrichtung für eine medizinische oder dentalmedizinische Beleuchtungsvorrichtung, insbesondere für eine Lichthärtvorrichtung zum Polymerisieren von Dentalmassen, nach einem der Ansprüche 1 bis 8, **dadurch gekennzeichnet, dass** die Lichtmischeinrichtung (2) eine Montagehülse - vorzugsweise mit einem hochtemperaturbeständigen Kunststoff, insbesondere einem Sulfon-, Etherketon- oder Imid-Kunststoff, oder -Kunststoff-Verbundwerkstoff - aufweist, mit welcher der Lichtmischkörper (8) vorzugsweise kraftschlüssig und/oder stoffschlüssig verbunden ist, wobei die Montagehülse vorzugsweise selbstjustierend bzgl. des Lichtleiters (3) und/oder der Lichterzeugungseinrichtung (1) mit mindestens einer der beiden verbindbar ist.

10. Lichtmischeinrichtung für eine medizinische oder dentalmedizinische Beleuchtungsvorrichtung, insbesondere für eine Lichthärtvorrichtung zum Polymerisieren von Dentalmassen, nach einem der Ansprüche 1 bis 9, **dadurch gekennzeichnet, dass** zumindest eine der Lichteintritts- und/oder -austrittsflächen des Lichtmischkörpers (8) aplanar ausgebildet ist.

11. Lichtmischeinrichtung für eine medizinische oder dentalmedizinische Beleuchtungsvorrichtung, insbesondere für eine Lichthärtvorrichtung zum Polymerisieren von Dentalmassen, nach einem der Ansprüche 1 bis 10, **dadurch gekennzeichnet, dass** die Lichtmischeinrichtung (2) im Gehäuse der Beleuchtungsvorrichtung bzw. der Lichthärtvorrichtung montierbar ist, wobei sie vorzugsweise beim Austausch des Lichtleiters (3) dort verbleiben kann.

12. Lichtmischeinrichtung für eine medizinische oder dentalmedizinische Beleuchtungsvorrichtung, insbesondere für eine Lichthärtvorrichtung zum Polymerisieren von Dentalmassen, nach einem der Ansprüche 1 bis 11, **dadurch gekennzeichnet, dass** die Lichtmischeinrichtung (2) zur Nachrüstung einer Beleuchtungsvorrichtung oder einer Lichthärtvorrichtung vorgesehen und ausgebildet ist und - vorzugsweise in einer Buchse - zwischen dem Lichtleiter (3) und dem Gehäuse der Lichterzeugungseinrichtung (1) bzw. des Lichthärtgerät montierbar ist.

13. Medizinische oder dentalmedizinische Beleuchtungsvorrichtung, insbesondere Lichthärtvorrichtung zum Polymerisieren von Dentalmassen, mit einem Gehäuse mit einer Lichterzeugungseinrichtung, einem Lichtleiter (3), sowie einer Lichtmischeinrichtung (2) nach einem der vorhergehenden Ansprüche, welcher zwischen der Lichterzeugungseinrichtung (1) und dem Lichtleiter (3) angeordnet ist.

14. Medizinische oder dentalmedizinische Beleuchtungsvorrichtung, insbesondere Lichthärtvorrichtung zum Polymerisieren von Dentalmassen, nach Anspruch 14, **dadurch gekennzeichnet, dass** die Lichtmischeinrichtung (2) im Gehäuse der Beleuchtungsvorrichtung bzw. der Lichthärtvorrichtung montierbar ist, wobei der Lichtleiter (3) mittels einer Lagerhülse am Gehäuse befestigbar und von Gehäuse und Lichtmischeinrichtung (2) trennbar und nach dem Trennen insbesondere zusammen mit der Lagerhülse autoklavierbar ist.

15. Medizinische oder dentalmedizinische Beleuchtungsvorrichtung, insbesondere Lichthärtvorrichtung zum Polymerisieren von Dentalmassen, nach Anspruch 13 oder 14, **dadurch gekennzeichnet, dass** zwischen der Lichtmischeinrichtung (2) und dem Lichtleiter (3) eine Justier- und/oder Andruckeinrichtung angeordnet ist, durch welche - zumindest mittelbar - der Lichtleiter (3) und die Lichtmischeinrichtung (2) lösbar und vorzugsweise elastisch verbindbar sind.

16. Medizinische oder dentalmedizinische Beleuchtungsvorrichtung, insbesondere Lichthärtvorrichtung zum Polymerisieren von Dentalmassen, nach einem der Ansprüche 13 bis 15, **dadurch gekennzeichnet, dass** durch die Justier- und/oder Andruckeinrichtung der Lichtleiter (3) mit einem Anpressdruck in Richtung auf die Lichtmischeinrichtung (2) beaufschlagbar ist, wodurch die Lichtaustrittsfläche des Lichtmischkörpers (8) bzgl. der Lichteintrittsfläche des Lichtleiters (3) definiert positionierbar ist.

17. Medizinische oder dentalmedizinische Beleuchtungsvorrichtung, insbesondere Lichthärtvorrichtung zum Polymerisieren von Dentalmassen, nach einem der Ansprüche 13 bis 16, **dadurch gekennzeichnet, dass** die Justier- und/oder Andruckeinrichtung zwischen der Lichtmischeinrichtung (2) und dem Lichtleiter (3) eine elastische Dehnungsreserve insbesondere zur Aufrechterhaltung des Anpressdrucks und/oder zur Gewährleistung der Justierung bei gleichzeitiger Ausgleichsfähigkeit für thermische Ausdehnungsbewegungen aufweist.

18. Medizinische oder dentalmedizinische Beleuchtungsvorrichtung, insbesondere Lichthärtvorrichtung zum Polymerisieren von Dentalmassen, nach einem der Ansprüche 13 bis 17, **dadurch gekennzeichnet, dass** die Justier- und/oder Andruckeinrichtung mindestens ein Federelement, insbesondere ein Ringfederelement aufweist, welches mit Ausnehmungen von Hülse und/oder Buchse, insbesondere mit Ringnuten (10, 12) von Hülse und Buchse verrastet, wobei das Federelement mit der Ausformung und/oder Anordnung der Ausnehmungen, insbesondere Ringnuten (10, 12), derart zusammenwirkt, dass ein Anpressdruck des Lichtleiters (3) in Axialrichtung des Lichtmischkörpers (8) gegen denselben erzeugbar ist.
